# EUROPÄISCHE PATENTANMELDUNG

(11) **EP 1 288 634 A2**
(43) Veröffentlichungstag der Anmeldung: **05.03.2003**
(21) Anmeldenummer: 02018032.9
(22) Anmeldetag: 13.08.2002
(51) Int. Cl.: G01F 15/10

(54) **Durchflussmessgerät mit Überlastsicherung**

(30) Priorität: 01.09.2001 DE 10143019
(71) Anmelder: Elster GmbH, 55252 Mainz-Kastel (DE)
(72) Erfinder: Goertz, Bernhard, 65191 Wiesbaden-Bierstadt (DE)
(74) Vertreter: Harlacher, Mechthild

(57) **Zusammenfassung**

Die Erfindung betrifft ein Messgerät zur Volumen- und Durchflussmessung für ein Fluid, insbesondere für ein Gas, wobei das Fluid durch das Messgerät strömt und dieses antreibt.

Erfindungsgemäß ist dem Messgerät ein Ventil vor- oder nachgeschaltet. Das Ventil weist einen Ventilkörper (1) auf, in dem eine Durchtrittsöffnung (7) ausgebildet ist. Der Durchtrittsöffnung (7) ist ein Verschlusselement (8) zugeordnet, das axial verschiebbar von einem elastischen Element (10) entgegen der Durchströmrichtung in Offenstellung gehalten wird. Das Verschlusselement (8) geht in eine Schließstellung, wenn der Volumenstrom einen Grenzwert überschreitet, wobei in der Schließstellung ein Mindestvolumenstrom durch mindestens eine Mindestdurchflussöffnung (13) erfolgt.

## Beschreibung

Die Erfindung betrifft ein Messgerät für ein Fluid, wobei das Fluid durch das Messgerät strömt und dieses antreibt. Es kann sich z. B. um einen Drehkolbenzähler, Turbinenradzähler oder ähnlichen mechanischen Zähler handeln. Derartige Messgeräte werden zur Erfassung und Anzeige des Gas oder Wasserverbrauchs, insbesondere im gewerblichen und industriellen Bereich eingesetzt.

Bei der Inbetriebnahme derartiger Messgeräte für Gas ist die Anschlussleitung nicht mit Gas gefüllt. In diesem Fall kann es beim zu schnellen Öffnen des eingangsseitigen Gasabsperrhahnes zu einem schlagartigen Anstieg des Volumenstroms bzw. des Durchflusses, d. h. zu einem Druckschub kommen. Dieser hat zur Folge, dass das Messgerät überlastet wird, weil insbesondere die maximale Drehzahl überschritten wird und es zu Beschädigungen oder sogar zur Zerstörung des Messgerätes kommen kann.

Aufgabe der Erfindung ist es demgemäss, ein Messgerät der eingangs genannten Art so weiterzubilden, dass Schäden durch Druckschübe vermieden werden.

Diese Aufgabe wird durch ein Messgerät mit den Merkmalen des Anspruches 1 gelöst.

Das Ventil wirkt als Überlastbegrenzung für das Messgerät. Die Mindestdurchflussöffnung kann so ausgelegt sein, dass in der Schließstellung der Durchfluss so groß ist, dass der Nenndurchfluss erreicht wird und insbesondere die normale Gasversorgung gewährleistet ist.

Das Ventil kann im stromauf des Messgerätes angeordnet sein. Beispielsweise kann das Ventil im Eingangsstutzen eines Gaszählers angeordnet werden. Bei Turbinenradzählern können die Überlastsicherung im Ausgang oder abströmseitig angeordnet werden, um eine Beeinflussung der Strömung zu vermeiden.

Das Ventil ist nachrüstbar, ohne dass das Messgerät neu kalibriert werden muss. Das Ventil kann für alle gebräuchlichen Nennweiten ausgelegt und gefertigt werden.

Vorzugsweise ist die Mindestdurchflussöffnung als mindestens eine Bohrung im Verschlusselement ausgebildet.

Nach einem weiteren Merkmal der Erfindung ist das Verschlusselement auf einem stiftförmigen Element beweglich angeordnet, wobei das stiftförmige Element am Ventilkörper befestigt ist.

Bei einer bevorzugten Ausführungsform, die zwischen zwei Flanschen befestigt werden kann, weist der Ventilkörper eine Platte auf, die mittels Abstandshaltern mit einem Halteelement für das stiftförmige und das elastischen Element verbunden ist.

Die Erfindung wird im folgenden anhand eines bevorzugten Ausführungsbeispiels im Zusammenhang mit der Zeichnung näher erläutert.

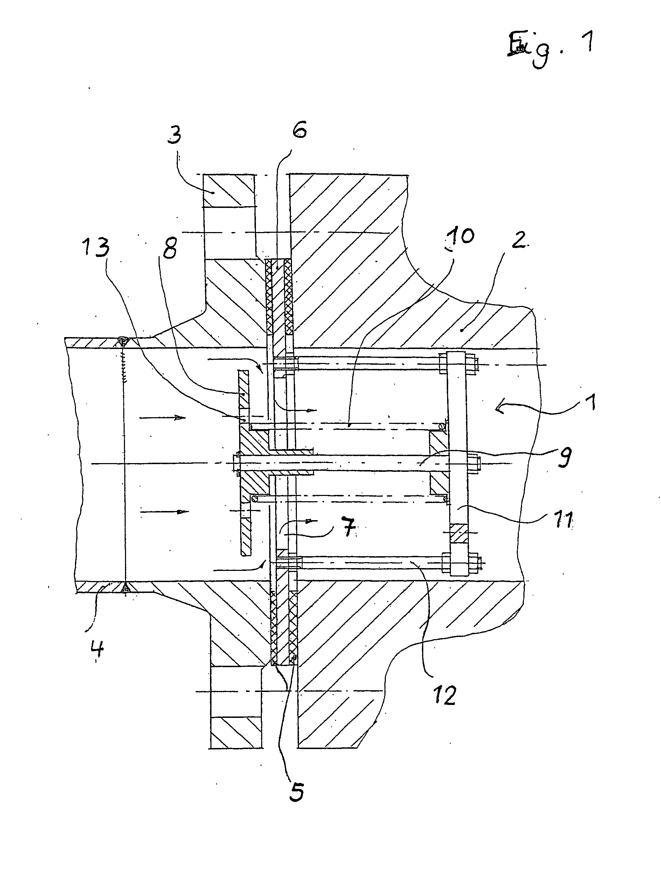

Die Zeichnung zeigt in
Fig. 1 einen Schnitt durch einen Eingangsstutzen eines Gasmessgerätes mit einem erfindungsgemäßen Ventil;

Bei der Ausführungsform nach Fig. 1 ist ein Ventilkörper 1 zwischen einem Eingangsstutzen 2 eines nicht dargestellten Messgerätes in Form eines Drehkolbenzählers und einem Flansch 3 eines Eingangsrohres 4 zwischen Dichtungen 5 eingeklemmt.

Der Ventilkörper 1 weist eine Platte 6 auf, in der eine Durchtrittsöffnung 7 ausgebildet ist. Stromauf der Durchtrittsöffnung 7 ist ein Verschlusselement 8 entgegen der Durchströmrichtung auf dem stiftförmigen Element 9 axial beweglich angeordnet. Ein elastisches Element 10 in Form einer Feder hält das Verschlusselement 8 entgegen der Strömungsrichtung in Offenstellung. Das stiftförmige Element 9 ist mit einem Halteelement 11 verbunden, gegen das sich auch die Feder 10 abstützt. Das Halteelement 11 ist mittels Abstandshaltern 12 mit der Platte 6 verbunden.

Im Verschlusselement 8 findet sich mehrere Mindestdurchflussöffnung 13, die als Bohrungen ausgeführt sind.

Die Federkraft der Feder 10 ist so ausgelegt, dass das Verschlusselement 8 gegen die Kraft der Feder 10 geschlossen wird, wenn der Volumenstrom durch das Messgerät einen oberen Grenzwert überschreitet. In der Schließstellung des Verschlusselements strömt weiterhin so viel Gas, dass die Gasversorgung in der Schließstellung nicht unterbrochen wird.

Sobald sich der Druckschub abbaut und der normalen Druck wieder erreicht ist, öffnet die Feder 10 das Verschlusselement 8 selbsttätig.

Im Rahmen der Erfindung sind ohne weiteres Abwandlungen möglich. So kann das Ventil zwischen zwei Normflanschen angeordnet werden. Der Ventilkörper kann auf andere geeignete Weise ausgeführt werden.

## Patentansprüche

1. Messgerät zur Volumen- und Durchflussmessung für ein Fluid, insbesondere für ein Gas, wobei das Fluid durch das Messgerät strömt und dieses antreibt,
**dadurch gekennzeichnet,**
**dass** dem Messgerät ein Ventil vor- oder nachgeschaltet ist,
**dass** das Ventil einen Ventilkörper (1) aufweist, in dem eine Durchtrittsöffnung (7) ausgebildet ist,
**dass** der Durchtrittsöffnung (7) ein Verschlusselement (8) zugeordnet ist, das axial verschiebbar von einem elastischen Element (10) entgegen der Durchströmrichtung in Offenstellung gehalten wird
und **dass** das Verschlusselement (8) in eine Schließstellung geht, wenn der Volumenstrom einen Grenzwert überschreitet, wobei in der Schließstellung ein Mindestvolumenstrom durch mindestens eine Mindestdurchflussöffnung (13) erfolgt.

2. Messgerät nach Anspruch 1,
**dadurch gekennzeichnet, dass** die Mindestdurchflussöffnung (13) als Bohrung im Verschlusselement ausgebildet ist.

3. Messgerät nach Anspruch 1 oder 2,
**dadurch gekennzeichnet, dass** das Verschlusselement (8) auf einem stiftförmigen Element (9) beweglich angeordnet ist, wobei das stiftförmige Element (9) mit dem Ventilkörper (1) verbunden ist.

4. Messgerät nach einem der Ansprüche 1 bis 3,
**dadurch gekennzeichnet, dass** der Ventilkörper (1) eine Platte (6) aufweist, die mittels Abstandshaltern (12) mit einem Halteelement (11) verbunden ist, an dem sich das elastische Element (10) abstützt und das stiftförmige Element (9) befestigt ist.
